Europäisches Patentamt

European Patent Office

Office européen des brevets

(19)

(11) **EP 1 071 733 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(21) Anmeldenummer: **99910292.4**

(22) Anmeldetag: **26.02.1999**

(51) Int Cl.[7]: **C10M 129/72**, C10M 133/56, C10L 1/22, C10L 1/18, C08F 8/46, C10M 129/95 // (C10N20/02, 20:04, 30:04, 40:25)

(86) Internationale Anmeldenummer:
**PCT/EP99/01253**

(87) Internationale Veröffentlichungsnummer:
**WO 99/46354 (16.09.1999 Gazette 1999/37)**

(54) **THERMISCHE UMSETZUNGSPRODUKTE AUS MALEINSÄUREANHYDRID UND OLIGOALKENEN, DERIVATE DER THERMISCHEN UMSETZUNGSPRODUKTE MIT AMINEN ODER ALKOHOLEN UND IHRE VERWENDUNG**

THERMAL CONVERSION PRODUCTS COMPRISED OF MALEIC ANHYDRIDE AND OLIGOALKENES, DERIVATIVES OF THE THERMAL CONVERSION PRODUCTS WITH AMINES OR ALCOHOLS AND THE USE THEREOF

PRODUITS DE REACTION THERMIQUE CONSTITUES D'ANHYDRIDE D'ACIDE MALEIQUE ET D'OLIGOALCENES, DERIVES DE CES PRODUITS DE REACTION THERMIQUE AVEC DES AMINES OU DES ALCOOLS ET LEUR UTILISATION

(84) Benannte Vertragsstaaten:
**BE DE ES FR GB IT**

(30) Priorität: **11.03.1998 DE 19810404**

(43) Veröffentlichungstag der Anmeldung:
**31.01.2001 Patentblatt 2001/05**

(73) Patentinhaber: **BASF AKTIENGESELLSCHAFT 67056 Ludwigshafen (DE)**

(72) Erfinder:
- **RATH, Hans, Peter D-67269 Grünstadt (DE)**
- **MACH, Helmut D-69115 Heidelberg (DE)**

(56) Entgegenhaltungen:
**GB-A- 1 439 567        US-A- 5 384 055**

EP 1 071 733 B1

**Beschreibung**

Die vorliegende Erfindung betrifft thermische Umsetzungsprodukte aus Maleinsäureanhydrid und Oligoalkenen aus bestimmten linearen $\alpha$-Olefinen, welche ein zahlengemitteltes Molekulargewicht von 700 bis 20000 aufweisen, sowie ein Verfahren zur Herstellung dieser thermischen Umsetzungsprodukte. Weiterhin betrifft die Erfindung Derivate der thermischen Umsetzungsprodukte mit Aminen oder Alkoholen in Form der entsprechenden Alkenylbernsteinsäure-amide, -imide bzw. -ester und die Verwendung dieser Derivate als Kraftund Schmierstoffaddditive. Gegenstand der vorliegenden Erfindung sind auch Motorenöle, welche diese Derivate als Additive enthalten.

Als aschefreie Dispergatoren in Form von Alkenylbernsteinsäure-Derivaten sind seit langem Imide von Polyisobutenylbernsteinsäuren bekannt. Der Polyisobutenylrest und auch entsprechende andere aus dem Stand der Technik bekannte langkettige Reste sorgen jedoch noch nicht für ein optimales Eigenschaftsspektrum solcher Dispergatoren. Insbesondere ist das Viskositäts-Verhaltens noch verbesserungsbedürftig, d.h. eine Herabsenkung der Tieftemperatur-Viskosität ist erwünscht.

Aus der WO-A 93/24539 (1) sind Poly-1-olefine aus $C_3$- bis $C_{20}$-1-Olefinen wie Propen, 1-Buten, 1-Penten oder 1-Hexen mit einem zahlengemittelten Molekulargewicht von 300 bis 10000 bekannt, welche durch übliche Metallocen-Katalyse hergestellt werden. Eingesetzt werden die genannten 1-Olefine stets im Gemisch mit leichter flüchtigen gesättigten und ungesättigten Kohlenwasserstoffen, beispielsweise werden ein technischer Butan/Buten-Strom oder technische isobutenhaltige Buten-Ströme ("Raffinat I/II" aus dem Steamcracker) verwendet. Die erhaltenen Poly-1-olefine können mittels Maleinsäureanhydrid dann in funktionalisierte Produkte übergeführt werden, welche unter anderem für Schmieröle und als Kraftstoffadditive Verwendung finden.

Die WO-A 96/28486 (2) betrifft Copolymerisate aus ungesättigten Dicarbonsäuren oder deren Anhydriden und Oligomeren von 1-Olefinen mit 3 bis 14 C-Atomen, welche durch Metallocenkatalyse hergestellt werden können. Als 1-Olefin wird unter anderem auch n-Decen genannt. Das mittlere Molekulargewicht der Olefinoligomere beträgt 300 bis 10000. Die aus den ungesättigten Dicarbonsäure(anhydride)n und den Olefinoligomeren erhaltenen Copolymerisate eignen sich nach Derivatisierung mit Aminen als Kraft- und Schmierstoffadditive.

Aus der WO-A 96/23751 (3) sind mittels Metallocenkatalysatorsystemen hergestellte Olefinoligomere bekannt, welche auf linearen und ringförmigen $C_2$- bis $C_{12}$-Olefinen, z.B. 1-Decen, basieren. Ihr gewichtsgemitteltes Molekulargewicht ($\overline{M}_w$) liegt bei 100 bis 20000 bei einer Molekulargewichtsverteilung $\overline{M}_w/\overline{M}_n$ (Gewichtsmittelwert/Zahlenmittelwert) von 1,0 bis 2,4. Ihr Polymerisationsgrad liegt im Bereich von 2 bis 200. Diese Olefinoligomere lassen sich gemäß (3) mit den üblichen chemischen Reaktionen wie Hydroformylierung und/oder Hydroaminierung zu funktionalisierten Verbindungen weiterverarbeiten, welche zum Beispiel als Kraft- oder Schmierstoffadditive geeignet sind.

Aufgabe der vorliegenden Erfindung war es, den Mängeln des Standes der Technik abzuhelfen.

Demgemäß wurden thermische Umsetzungsprodukte aus Maleinsäureanhydrid und Oligoalkenen, welche durch metallocenkatalysierte Oligomerisierung von linearen $C_8$- bis $C_{12}$-1-Alkenen in Gegenwart eines Titan-, Zirkonium- oder Hafnium-Metallocen-Katalysators und eines Aktivators auf Basis von aluminiumorganischen, bororganischen oder carbokationischen Verbindungen erhältlich sind, einen Vinylidendoppelbindungsanteil von über 30 %, insbesondere über 50 %, vor allem über 60 %, aufweisen und ein zahlengemitteltes Molekulargewicht von 700 bis 20000 besitzen, gefunden.

Als lineare $C_8$- bis $C_{12}$-1-Alkene sowie deren Mischungen kommen 1-Octen, 1-Nonen, 1-Decen, 1-Undecen und 1-Dodecen sowie deren Mischungen in Betracht. In einer bevorzugten Ausführungsform werden Oligoalkene eingesetzt, welche durch metallocenkatalysierte Oligomerisierung von linearem 1-Decen, wobei bis zu 40 mol-%, bezogen auf die Menge an linearem 1-Decen, weitere lineare $C_8$- bis $C_{12}$-1-Alkene mit einpolymerisiert werden können, erhältlich sind.

Die wesentliche Monomerkomponente in dieser bevorzugten Ausführungsform ist somit lineares 1-Decen, welches allein oder in Mischung mit bis zu 40 mol-%, insbesondere bis zu 20 mol-%, vor allem bis zu 5 mol-%, bezogen auf die Menge an 1-Decen, weiterer linearer $C_8$- bis $C_{12}$-1-Alkene (1-Octen, 1-Nonen, 1-Undecen und/ oder 1-Dodecen) oligomerisiert werden kann.

Die genannten 1-Alkene können in chemisch reiner Form (Reinheiten von üblicherweise 99 bis 93,9 Gew.-%) oder als technische Gemische in Reinheiten von üblicherweise 90 bis 99 Gew.-% eingesetzt werden, wobei bei den technischen Gemischen die restlichen Bestandteile normalerweise in etwa gleich flüchtige, polymerisationsfähige oder nicht polymerisationsfähige Komponenten (beispielsweise ungesättigte Isomere, Homologe oder gesättigte Kohlenwasserstoffe) sind. In der Regel sind die eingesetzten 1-Alkene praktisch frei von flüchtigeren Komponenten, vor allem frei von flüchtigeren gesättigten oder ungesättigten Kohlenwasserstoffen, insbesondere solchen mit weniger als 8 C-Atomen; praktisch frei bedeutet, daß höchstens ein Anteil an solchen flüchtigeren Komponenten von unter 1 Gew.-%, insbesondere unter 0,5 Gew.-%, auftreten kann.

Die zur Oligomerisierung verwendeten Systeme aus Metallocen-Katalysator und Aktivator sind übliche Katalysatorsysteme. Durch Variation der Struktur des Metallocens lassen sich in bekannter Weise die gewünschten Molekulargewichtsbereiche der Oligoalkene einstellen. Die Oligomerisierung wird in der Regel in einem geeigneten Medium ("Reaktionsgemisch"), z.B. einem organischen Lösungsmittel, unter den hierfür üblichen Bedingungen durchgeführt.

An die Katalysatorsysteme werden keine besonderen Anforderungen gestellt, außer daß sie in dem Reaktionsgemisch weitgehend löslich sind. Das Reaktionsgemisch ist die Mischung, welche in der Zeit nach dem Zusammengeben aller Reaktionskomponenten bis spätestens zum Zerstören des Katalysatorsystems nach erfolgter Oligomerisierungsreaktion vorliegt. Die Löslichkeit des Katalysatorsystems im Reaktionsgemisch wird durch die Messung der Trübung des Reaktionsgemisches analog DIN 38404 bestimmt. Eine weitgehende Löslichkeit des Katalysatorsystems liegt vor, wenn die Trübungszahl im Bereich von 1 bis 10, vorzugsweise im Bereich von 1 bis 3, liegt.

Bei der Metallocenkomponente des Katalysatorsystems handelt es sich um Komplexe des Titans, Zirkoniums und Hafniums, bei denen das Metallatom M sandwichartig zwischen zwei gegebenenfalls substituierten Cyclopentadienyl-Gruppen gebunden ist, wobei die restlichen Valenzen des Zentralatoms M durch leicht austauschbare Abgangsatome oder Abgangsgruppen $X^1$, $X^2$ abgesättigt sind.

Geeignete Metallocenkomplexe sind solche mit der allgemeinen Formel $Cp_2MX^1X^2$ in welchen M Titan, Zirkonium oder Hafnium, vorzugsweise Zirkonium, bedeuten.

$Cp_2$ stehen für ein Paar von gegebenenfalls substituierten Cyclopentadienyl-Liganden. Hierbei können beide Cyclopentadienyl-Liganden oder nur einer der beiden substituiert sein.

Für den Fall, daß die Substituenten $C_5$- bis $C_{30}$-Alkylgruppen bedeuten, sind die Cyclopentadienylringe üblicherweise symmetrisch substituiert. Dies bedeutet, daß sowohl Art, Anzahl als auch die Position der Alkyl-Substituenten des einen Cp-Ringes identisch ist mit Art, Anzahl und auch Position der Alkyl-Substituenten des zweiten Cp-Ringes. Die Anzahl der Alkylgruppen pro Cyclopentadienylring beträgt 1 bis 4.

Geeignete $C_5$- bis $C_{30}$-Alkylreste sind die aliphatischen Reste Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl und Eicosyl sowie ihre Isomere, wie beispielsweise neo-Pentyl, iso-Octyl, sowie die cycloaliphatischen Reste Cyclopentyl und Cyclohexyl. Besonders gut geeignet ist n-Octadecyl.

Die gegebenenfalls $C_5$- bis $C_{30}$-alkylsubstituierten Cyclopentadienyleinheiten können aber auch mit je 1 bis 2 $C_4$- bis $C_{10}$-Alkyleinheiten substituiert sein, die zusammen mit der Cyclopentadienyleinheit ein anneliertes Ringsystem, wie beispielsweise das Tetrahydroindenylsystem, bilden.

Als substituierte Cyclopentadienyl-Liganden kommen aber auch solche Paare in Frage, in welchen mindestens eine Cyclopentadienyleinheit mit mindestens einer Organosilylgruppe-Si $(R^1)_3$ substituiert ist. $R^1$ bedeutet dann eine $C_1$- bis $C_{30}$-Kohlenstoff-organische Gruppe wie Methyl, Ethyl, n-Propyl, i-Propyl, n-Butyl, i-Butyl, sec.-Butyl, tert.-Butyl, n-Pentyl, i-Pentyl, neo-Pentyl, Hexyl, Heptyl, Octyl, Nonyl, Cyclohexyl, Phenyl oder p-Tolyl. Bevorzugte Organosilylreste sind Trimethylsilyl und tert.-Butyldimethylsilyl, insbesondere Trimethylsilyl.

Für den Fall der Organosilylsubstitution an den Cyclopentadienyleinheiten ist das symmetrische Substitutionsmuster nicht zwingend notwendig, aber auch nicht ausgeschlossen.

Von Interesse sind auch solche Metallocen-Katalysatoren, bei denen beide Cyclopentadienyl-Liganden über ein Brückenglied miteinander verbunden sind. Solche Brückenglieder haben meist 1 bis 4 Atome (C-Atome und/oder Heteroatome wie Si, N, P, O, S, Se oder B) und gegebenenfalls Alkylseitenketten, z.B. 1,2-Ethyliden, 1,3-Propyliden oder Dialkylsilan-Brücken.

Als leicht austauschbare, formal negativ geladene Abgangsatome oder Abgangsgruppen $X^1$, $X^2$ der Metallocenkomplexe der allgemeinen Formel $Cp_2MX^1X^2$ seien genannt: Wasserstoff, Halogen wie Fluor, Brom, Iod und vorzugsweise Chlor. Darüber hinaus seien genannt: Alkoholate wie Methanolat, Ethanolat, n- und i-Propanolat, Phenolat, Trifluormethylphenolat, Naphtholat und Silanolat.

Weiterhin empfehlen sich für $X^1$, $X^2$ besonders aliphatische $C_1$- bis $C_{10}$-Alkyl-Reste, insbesondere Methyl, Ethyl, Propyl, iso-Propyl, Butyl, iso-Butyl, sec.-Butyl, tert.-Butyl, Pentyl, neo-Pentyl, Hexyl, vorzugsweise Methyl, tert.-Butyl und neo-Pentyl, desweiteren alicyclische $C_3$ bis $C_{12}$-Kohlenwasserstoffreste wie Cyclopropyl, Cyclobutyl, Cyclopentyl und insbesondere Cyclohexyl oder $C_5$- bis $C_{20}$-Bicycloalkyl wie Bicyclopentyl und insbesondere Bicycloheptyl und Bicyclooctyl.

Als Substituenten $X^1$, $X^2$ mit aromatischen Struktureinheiten seien genannt: $C_6$- bis $C_{15}$-Aryl, bevorzugt Phenyl oder Naphthyl, Alkylaryl oder Arylalkyl mit jeweils 1 bis 10 C-Atomen im Alkylrest und 6 bis 20 C-Atomen im Arylrest wie beispielsweise Tolyl und Benzyl.

Einzelne Beispiele für geeignete Metallocenkomplexe sind: Bis(noctadecylcyclopentadienyl)zirkoniumdichlorid, Bis(trimethylsilylcyclopentadienyl)zirkoniumdichlorid, Bis(tetrahydroindenyl)zirkoniumdichlorid, Bis[(tert.-butyldimethylsilyl)cyclopentadienyl]-zirkoniumdichlorid, Bis(di-tert.-butylcyclopentadienyl)zirkoniumdichlorid, (Ethyliden-bisindenyl)-zirkoniumdichlorid, [Ethylidenbis(tetrahydroindenyl)]zirkoniumdichlorid und Bis[3,3(2-methylbenzindenyl)]dimethylsilandiyl-zirkoniumdichlorid.

Die genannten Metallocenkomplexe können auf einfache Weise nach bekannten Verfahren, z.B. Brauer (Hrsg.): Handbuch der Präparativen Anorganischen Chemie, Band 2, 3. Auflage, Seite 1395 bis 1397, Enke, Stuttgart 1978, synthetisiert werden. Ein bevorzugtes Verfahren geht von den Lithiumsalzen der entsprechend substituierten Cyclopentadienyle aus, welche mit den Übergangsmetallhalogeniden umgesetzt werden.

Zweckmäßigerweise wird nur ein Metallocenkomplex in der Oligomerisierungsreaktion eingesetzt, es ist aber auch möglich, Mischungen verschiedener Metallocenkomplexe zu verwenden.

Neben den Metallocenkomplexen enthalten die Katalysatorsysteme noch Aktivatoren, die an sich bekannt sind und im Schrifttum auch Cokatalysatoren genannt werden. Im allgemeinen alkylieren sie die Übergangsmetallkomponente des Katalysatorsystems und/oder abstrahieren einen Liganden X von der Übergangsmetallkomponente, so daß letztendlich ein Katalysatorsystem für die Oligomerisierung von olefinisch ungesättigten Kohlenwasserstoffen entstehen kann. Für diese Aufgabe sind im allgemeinen metallorganische Verbindungen der 1. bis 3. Hauptgruppe oder der 2. Nebengruppe des Periodensystems geeignet, jedoch können auch andere Akzeptorverbindungen, wie beispielsweise Carbokationen-Salze, eingesetzt werden.

Im vorliegenden Fall gut geeignete Aktivatorverbindungen sind neben Aluminiumfluorid vor allem aluminiumorganische und bororganische Verbindungen sowie Carbokationen-Salze. Bevorzugt werden offenkettige oder cyclische oligomere Alumoxanverbindungen, die durch Umsetzung von Aluminiumtrialkylen, insbesondere Trimethyloder Triethylaluminium, mit Wasser erhalten werden können.

Als Cokatalysatoren sind im allgemeinen auch Aluminiumorganyle der allgemeinen Formel $Al(R^2)_3$ geeignet, wobei $R^2$ Wasserstoff, $C_1$-bis $C_{10}$-Alkyl, vorzugsweise $C_1$- bis $C_4$-Alkyl, insbesondere Methyl, Ethyl oder Butyl, bedeutet. Darüber hinaus kann $R^2$ auch für Arylalkyl oder Alkylaryl mit jeweils 1 bis 10 C-Atomen im Alkylrest und 6 bis 20 C-Atomen im Arylrest stehen.

Weiterhin sind Aluminiumalkyle $Al(R^2)_3$ geeignet, in denen $R^2$ außer den oben definierten Resten noch Fluor, Chlor, Brom oder Iod bedeuten kann, mit der Maßgabe, daß mindestens ein Rest $R^2$ ein C-organischer Rest oder ein Wasserstoffatom ist. Besonders bevorzugte Verbindungen sind Trimethylaluminium, Triethylaluminium, Triisobutylaluminium, Di-isobutylaluminiumhydrid und Diethylaluminiumchlorid.

Außerdem sind als Aktivatoren noch bororganische Verbindungen gut geeignet, beispielsweise Tris-arylborverbindungen, bevorzugt Tris(pentafluorophenyl)bor, weiterhin Salze von Carboniumionen, bevorzugt Triphenylmethyltetraarylborat, insbesondere Triphenylmethyltetra(pentafluorophenyl)borat.

Die genannten Al-, B- oder C-Verbindungen sind bekannt oder in an sich bekannter Weise erhältlich.

Die Aktivatoren können für sich allein oder als Mischungen im Katalysatorsystem eingesetzt werden.

Vorzugsweise setzt man die Aktivatorkomponente im molaren Überschuß bezüglich des Metallocenkomplexes ein. Das Molverhältnis von Aktivator zu Metallocenkomplex beträgt im allgemeinen 100 : 1 bis 10000 : 1, vorzugsweise 100 : 1 bis 1000 : 1.

Die Bestandteile der beschriebenen Katalysatorsysteme können in beliebiger Reihenfolge einzeln oder als Gemisch in den Oligomerisierungsreaktor eingebracht werden. Vorzugsweise wird der Metallocenkomplex mit mindestens einer Aktivatorkomponente vor dem Eintritt in den Reaktor gemischt, das bedeutet voraktiviert.

Die Herstellung der Oligoalkene kann in den üblichen, für die Oligomerisation von Olefinen verwendeten Reaktoren entweder diskontinuierlich oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Oligomerisation kann in einer Suspension, in flüssigen Monomeren und in inerten Lösungsmitteln durchgeführt werden. Bei der Oligomerisation in Lösungsmitteln werden insbesondere flüssige organische Kohlenwasserstoffe wie Benzol, Ethylbenzol oder Toluol verwendet. Vorzugsweise werden die Oligomerisierungen in einem Reaktionsgemisch durchgeführt, in welchem das flüssige Monomere im Überschuß vorliegt.

Da die Oligomerisierung in der Regel bei Temperaturen von -20°C bis 200°C, insbesondere von 0 bis 140°C, vor allem bei 30°C bis 110°C, vorgenommen wird, kann man sie meist im Niederdruck- oder Mitteldruckverfahren durchführen. Die Menge an eingesetztem Katalysator ist nicht kritisch.

Die durch Metallocenkatalyse hergestellten Oligoalkene enthalten aufgrund des Oligomerisierungsmechanismus ungesättigte Doppelbindungen; hierbei ist der Anteil an endständigen Vinyliden-Doppelbindungen besonders hoch, was die weitgehend vollständige thermische Umsetzung mit Maleinsäureanhydrid erst ermöglicht.

Die beschriebenen Oligoalkene weisen ein zahlengemitteltes Molekulargewicht ($\overline{M}_N$) von 700 bis 20000, vorzugsweise von 1000 bis 18000, vor allem 2000 bis 15000, insbesondere von 3000 bis 12000, auf. Die Bestimmung des zahlengemittelten Molekulargewichtes erfolgt üblicherweise durch Gelpermeationschromatographie (GPC).

Die Molekulargewichtsverteilung $\overline{M}_w/\overline{M}_N$ (Gewichtsmittelwert/Zahlenmittelwert) liegt im allgemeinen bei 1,5 bis 5, wobei eine enge Verteilung, beispielsweise durch Extraktionsverfahren breiter verteilter Proben, entstehen und eine breite Verteilung auch durch Abmischungen erhalten werden kann. Werden einheitliche Katalysatorsysteme eingesetzt, liegt die Verteilung im allgemeinen bei 1,8 bis 3,0. Unter Umständen kann eine breitere Verteilung vorteilhafter sein, insbesondere kann eine breite niedermolekulare Flanke in der Verteilung die Dispergierwirkung der Endprodukte verbessern. Weiterhin können sich auch durch Abmischungen erzeugte bimodale Verteilungen vorteilhaft auswirken.

Die beschriebenen Oligoalkene werden mit Maleinsäureanhydrid (MSA) durch eine übliche thermische "En"-Reaktion zu Alkenylbernsteinsäureanhydriden umgesetzt, welche in der Regel 1 bis 2 Succinanhydrid-Einheiten pro Alkenylkette tragen. Hierzu erhitzt man zweckmäßigerweise das Maleinsäureanhydrid und die Oligoalkene in Abwesenheit von Radikalkettenreaktionen auslösenden Verbindungen auf Temperaturen von 150 bis 250°C, vorzugsweise 170 bis 220°C. Die Umsetzung wird vorteilhafterweise unter Inertgas (z.B. Stickstoff) durchgeführt.

Die erfindungsgemäßen thermischen Umsetzungsprodukte aus Maleinsäureanhydrid und Oligoalkenen lassen sich mit Aminen oder Alkoholen nach üblichen Methoden in die entsprechenden Alkenylbernsteinsäureamide, -imide bzw. -ester überführen, solche Derivate sind ebenfalls Gegenstand der vorliegenden Erfindung.

Als Alkohole lassen sich hierbei insbesondere Polyole, vor allem aliphatische Polyhydroxyverbindungen mit 2 bis 6 Hydroxylgruppen, einsetzen. Beispiele für Diole sind Ethylenglykol, 1,2- und 1,3-Dihydroxypropan, Dihydroxybutane und Dihydroxypentane. Beispiele für Triole sind Glycerin, Trihydroxybutane, Trihydroxypentane und Trimethylolpropan. Beispiele für höhere Alkohole sind Pentaerythrol, Mannitol und Sorbitol.

Um entsprechende Succinimid- oder Succinamid-Derivate zu bilden, muß mit einem Amin, welches mindestens eine sekundäre Aminfunktion (NH) bzw. eine primäre Aminfunktion ($NH_2$) aufweist, umgesetzt werden. Von besonderem Interesse sind hierbei lineare oder verzweigte Alkylenpolyamine, cycloaliphatische Polyamine und heterocyclische Polyamine mit jeweils 2 bis 6 Aminogruppen. Beispiele hierfür sind Ethylenpolyamine wie Ethylendiamin, Diethylentriamin, Triethylentetramin, Tetraethylenpentamin oder Pentaethylenhexamin, Propylenpolyamine, Dimethylaminopropylamin, α,β-Diaminopropane, α,β-Diaminobutane, Di(trimethylen)triamin, Butylenpolyamine, Piperazin oder Diaminocyclohexane.

Insbesondere interessant sind als Derivate der erfindungsgemäßen thermischen Umsetzungsprodukte aus Maleinsäureanhydrid und Oligoalkenen die entsprechenden Alkenylbernsteinsäureimide, welche sich von Polyaminen mit mindestens einer primären Aminfunktion ableiten.

Eine bevorzugte Ausführungsform stellen solche Derivate der thermischen Umsetzungsprodukte aus Maleinsäureanhydrid und Oligoalkenen mit Aminen in Form der entsprechenden Alkenylbernsteinsäureimide dar, welche durch Kondensation der Umsetzungsprodukte aus Maleinsäureanhydrid und Oligoalkenen mit Polyaminen erhältlich sind, wobei die eingesetzte Polyaminmenge 10 bis 200 % über dem theoretischen Aminbedarf für die Herstellung eines Bisbernsteinsäureimids liegt und die Aminzahl des so erhaltenen Kondensates mindestens 70 % der theoretisch berechneten Aminzahl des Bisbernsteinsäureimids, bezogen auf die Verseifungszahl des Umsetzungsproduktes aus Maleinsäureanhydrid und Oligoalkenen, beträgt.

Bei der Maleinierung der Oligoalkene (typische Bedingungen: 4 h, 200°C, 10 Gew.-% MSA bezogen auf das Oligoalken) laufen offensichtlich auch andere Reaktionen ab, die nach Abdestillieren von MSA und Filtration des Alkenylbernsteinsäureanhydrids keine Säurezahl oder Verseifungszahl (VZ) liefern, in der nachfolgenden Imidierungsstufe (typische Bedingungen: 3 h, 180°C) mit Polyaminen jedoch mit den Amingruppen unter Verlust der Basizität (Aminzahl) reagieren.

Aus der Verseifungszahl des Alkenylbernsteinsäureanhydrids (SA) errechnet sich unter der Annahme einer Imidierungsreaktion mit zwei Mol Anhydrid und einem Mol Polyamin (z.B. Tetraethylenpentamin, TEPA) eine theoretische Aminzahl. Bei Einsatz der theoretischen Aminmenge erhält man aber nicht die theoretische Aminzahl und eine schlechte Dispergierwirkung. Die Dispergierwirkung ist um so schlechter, je weiter die Aminzahl vom theoretischen Wert entfernt ist. Es wurde nun die Aminmenge so lange angehoben, bis zumindest die theoretische Aminzahl bei der Kondensation erreicht wird. An diesem Punkt erhält man dann eine exzellente Dispergierwirkung.

Doch für die dann eingesetzte Aminmenge sollte für ein Bissuccinimid dann eine deutlich höhere Aminzahl resultieren. Über Iteration wird schließlich eine Aminmenge erreicht, die nach Kondensation im Falle des TEPA nur dreien der ursprünglich fünf Aminfunktionen entspricht. Die optimale Wirkung liegt meist zwischen diesen beiden Eckpunkten.

Zwei Beispiele sollen in der nachfolgenden Tabelle 1 diese unerwartete Diskrepanz zwischen Alkenylbernsteinsäureanhydrid und Aminbedarf erläutern:

Tabelle 1

| Oligodecenylsuccinanhydrid | | rechn. Aminzahl für Bissuccinimid mit 0,5 mol TEPA | tatsächlicher TEPA-Bedarf [mol]/[mol SA] | TEPA-Überschuß [%] |
|---|---|---|---|---|
| VZ | reche. $M_N$ | | | |
| 11,25 | 9.973 | 8,37 | 0,85 | 70 |
| 8,0 | 14.025 | 5,96 | 1,10 | 120 |

Die erfindungsgemäßen Derivate der thermischen Umsetzungsprodukte aus Maleinsäureanhydrid und Oligoalkenen mit Aminen oder Alkoholen eignen sich in hervorragender Weise als Kraft- und insbesondere als Schmierstoffadditive, vor allem als aschefreie Dispergatoren in Motorenölen. Die erfindungsgemäßen Derivate bewirken bei damit additivierten Motorenölen ein ausgezeichnetes Viskositäts-Temperatur-Verhalten, so daß auf die üblichen Viskositätsindex-Verbesserer weitgehend oder zumindest teilweise verzichtet werden kann. Insbesondere wird eine deutliche Absenkung der Tieftemperatur-Viskosität erreicht. Außerdem weisen sie bereits in geringen Mengen eine hervorragende Dispergierwirkung auf.

Gegenstand der vorliegenden Erfindung sind auch Motorenöle mit einem Gehalt von 0,1 bis 10 Gew.-%, insbesondere 0,5 bis 7 Gew.-%, bezogen auf das Motorenöl, an den erfindungsgemäßen Derivaten der thermischen Umsetzungsprodukte aus Maleinsäureanhydrid und Oligoalkenen mit Aminen oder Alkoholen. Unter Motorenölen sollen hier sowohl mineralische als auch teil- und vollsynthetische Motorenöle (auf Basis von beispielsweise Mineralöl, synthetischen Komponenten wie organischen Estern, synthetischen Kohlenwasserstoffen, Poly-$\alpha$-olefinen oder Polyolefinen wie Polyisobuten oder Mischungen von Mineralöl mit solchen synthetischen Komponenten) verstanden werden. Solche Motorenöle können für die verschiedensten Anwendungszwecke (z.B. Viertaktmotorenöle, Zweitaktmotorenöle, Automobil- und Zweiradmotorenöle, Schiffsdieselmotorenöle, Lokomotivdieselmotorenöle, etc.) eingesetzt werden. Die erfindungsgemäßen Derivate der thermischen Umsetzungsprodukte eignen sich daneben auch als Additive in Getriebeölen.

Die nachfolgenden Beispiele sollen die vorliegende Erfindung weiter erläutern, ohne jedoch als Einschränkung verstanden zu werden. Prozentangaben beziehen sich - sofern nicht anders angegeben ist - stets auf das Gewicht.

Herstellungsbeispiele

Beispiel 1:

Synthese eines Oligodecens mit $\overline{M}_N$ = 11.400

In einem 1 1-Rührautoklav mit Doppelmantel aus V4A-Stahl wurden 400 ml lineares 1-Decen (Polymergualität, 99,8 %) zusammen mit 300 ml über $Al_2O_3$ getrocknetem Ethylbenzol vorgelegt und auf 50°C geheizt. In einem Schlenkgefäß wurden 44 mg (Ethyliden-bisindenyl)zirkoniumdichlorid in 43,8 ml Methylalumoxan (10 %ig in n-Hexan) gelöst, über eine Schleuse mit Stickstoff portionsweise in den Reaktor gedrückt und mit 30 ml Ethylbenzol nachgespült. Die Portionierung erfolgte so, daß der Kryostat, der die Reaktionswärme abführte, nicht überlastet wurde und die Reaktortemperatur bei 50°C halten konnte. Es ergab sich eine Temperaturdifferenz zwischen Mantel und Reaktorinhalt von max. 40°C, die im Laufe von 2 bis 3 Stunden abklang. Nach 4 Stunden wurde auf Raumtemperatur abgekühlt, der Autoklav entleert und mit aliquoten Mengen Cyclohexan verdünnt. Es wurde mit 100 ml 0,1 %iger Schwefelsäure und zwei Mal mit je 100 ml VE-Wasser gewaschen, über $Na_2SO_4$ getrocknet und bis 225°C (2 mbar) ausdestilliert. Das Sumpfprodukt hatte eine Viskosität von 1100 mm$^2$/s (100°C) und $\overline{M}_N$ nach GPC von 11.400. Die Ausbeute betrug 85 %, der Vinylidendoppelbindungsgehalt 94 %.

Beispiel 2:

Umsetzung des Oligodecens aus Beispiel 1 mit Maleinsäureanhydrid (MSA) und Derivatisierung mit Tetraethylenpentamin (TEPA)

200 g des Oligodecens aus Beispiel 1 wurden mit 20 g MSA in einem 0,5 1 Rührautoklav aus V2A-Stahl vorgelegt, auf 20 mbar evakuiert, mit Stickstoff entspannt und erneut auf 20 mbar evakuiert. Dann wurde auf 200°C erhitzt und vier Stunden gehalten, danach entspannt und bei 2 mbar von überschüssigem MSA befreit. Das Umsetzungsprodukt hatte eine Verseifungszahl von 6,0. Nach Absenkung der Temperatur auf 180°C wurden 1,53 g TEPA zugesetzt und 2 Stunden nachkondensiert. Die Säurezahl des Imids lag bei 0,7 und die Aminzahl bei 4,8.

Beispiel 3:

Synthese eines Oligodecens mit $\overline{M}_N$ = 5600

In einem 1 l-Rührautoklav mit Doppelmantel gemäß Beispiel 1 wurden 400 ml lineares 1-Decen (Reinheit: 96 %ig) und 300 ml über $Al_2O_3$ getrocknetes Ethylbenzol vorgelegt und auf Null °C gekühlt. In einem Schlenkgefäß wurden 80 mg Bis(n-octadecylcyclopentadienyl)zirkoniumdichlorid mit 32 ml Methylalumoxan (10 %ig in n-Hexan) aktiviert und in zwei Portionen binnen fünf Minuten zugegeben. Eine vorübergehende Temperaturerhöhung von 2 bis 3°C war zu beobachten. Nach 8 Stunden bei 0°C wurde der Reaktor entleert, durch langsames Zutropfen von verdünnter Schwefelsäure unter Rühren wurde die Reaktion abgebrochen und wie in Beispiel 1 aufgearbeitet. Man erhielt ein Oligodecen mit einer Viskosität von 580 mm$^2$/s bei 100°C und $\overline{M}_N$ nach GPC von 5600. Die Ausbeute betrug 83 %, der Vinylidendoppelbindungsgehalt 95 %.

Vergleichsbeispiel A:

Derivat von Polyisobutenylbernsteinsäureanhydrid (PIBSA) mit TEPA

Zum Vergleich wurden 200 g hochreaktives Polyisobuten mit einem zahlengemittelten Molekulargewicht ($\overline{M}_N$) von 2330 und einem Vinylidendoppelbindungsgehalt von 77 % in einem 0,5 1 Rührautoklav aus V2A-Stahl vorgelegt, auf 160°C erhitzt, evakuiert und mit Stickstoff gestrippt. Unter Rühren wurden innerhalb von 1 Stunde 13 g MSA in flüssiger Form zudosiert. Anschließend wurde auf 225°C erhöht und 4 Stunden reagieren gelassen. Unter Vakuum von 2 mbar wurde überschüssiges MSA entfernt. Das Umsetzungsprodukt wies eine Verseifungszahl von 42 auf. Nach Absenken der Temperatur auf 180°C wurde TEPA im Verhältnis zu PIBSA von 1 : 2, d.h. 7,9 g, zugesetzt und 2 Stunden nachkondensiert.

Prüfung des Viskositäts-Temperatur-Verhaltens

Die Produkte aus Beispiel 2 und Vergleichsbeispiel A wurden als aschefreie Dispergatoren in einer Konzentration von 6 % in einem 5W/30 Motorenöl mit folgender Zusammensetzung getestet:

| | |
|---|---|
| übliches Poly-$\alpha$-olefin (Viskosität: 6 mm$^2$/s) | 54,4 oder 48,4 % |
| übliches Poly-$\alpha$-olefin (Viskosität: 4 mm$^2$/s) | 20 % |
| Diisononyladipat | 20 % |
| aschefreie Dispergatoren | 0 oder 6 % |
| übliches überbasisches Sulfonat | 3 % |
| Zinkdithiophosphat | 1,8 % |
| übliches Antioxidant | 0,5 % |
| üblicher Friction Modifier | 0,2 % |
| üblicher Schauminhibitor | 0,1 % |

Die Ergebnisse sind in Tabelle 2 zusammengefaßt:

Tabelle 2

| Dispergator nach Beispiel | Viskosität bei 100°C [mm$^2$/s] | Viskosität bei -25°C [mPa s] | Löslichkeit |
|---|---|---|---|
| ohne Dispergator | 7,55 | 1900 | klar |
| 2 | 12,15 | 3000 | klar |
| A | 10,85 | 3400 | klar |

Der erfindungsgemäße Dispergator aus Beispiel 2 ist demnach dem Stand der Technik (Vergleichsbeispiel A) wegen der größeren viskositäterhöhenden Wirkung bei hoher Temperatur bei gleichzeitiger niedrigerer Viskosität bei tiefer Temperatur deutlich überlegen.

Prüfung der Dispergierwirkung

Zur Prüfung der Dispergierwirkung wurde der Tüpftest durchgeführt (beschrieben in "Les Huiles pour Moteurs et la Graissage des Moteurs", A. Schilling, Vol. 1, S. 89 f, 1962). Hierzu wurden 3 %ige Mischungen der Dispergatoren in einem Dieselrußöl hergestellt. Die so erhaltenen Dispersionen wurden auf einem Filterpapier wie ein Chromatogramm entwickelt. Die Bewertungsskala reicht dabei von 0 bis 1000: je höher der erzielte Wert, desto besser die Dispergierwirkung.

Die Ergebnisse sind in Tabelle 3 zusammengestellt:

Tabelle 3

| Dispergator nach Beispiel | 10 min bei 20°C ohne Wasser | 10 min bei 20°C mit Wasser | 10 min bei 250°C ohne Wasser | 10 min bei 250°C mit Wasser |
|---|---|---|---|---|
| 2 (mit 3 % Dispergator) | 675 | 677 | 704 | 701 |

Tabelle 3   (fortgesetzt)

| Dispergator nach Beispiel | 10 min bei 20°C ohne Wasser | 10 min bei 20°C mit Wasser | 10 min bei 250°C ohne Wasser | 10 min bei 250°C mit Wasser |
|---|---|---|---|---|
| 2 (mit 2 % Dispergator) | 654 | 638 | 654 | 638 |
| A (mit 3 % Dispergator) | 651 | 647 | 643 | 661 |

Der erfindungsgemäße Dispergator aus Beispiel 2 zeigt in allen Fällen eine signifikant bessere Dispergierwirkung als der Stand der Technik, denn bereits mit 2 % des Produktes aus Beispiel 2 wird eine vergleichbare Dispergierwirkung erzielt wie mit 3 % des Vergleichsbeispiels A.

**Patentansprüche**

1. Thermische Umsetzungsprodukte aus Maleinsäureanhydrid und Oligoalkenen, welche durch metallocenkatalysierte Oligomerisierung von linearen $C_8$-bis $C_{12}$-1-Alkenen in Gegenwart eines Titan-, Zirkonium- oder Hafnium-Metallocen-Katalysators und eines Aktivators auf Basis von aluminiumorganischen, bororganischen oder carbokationischen Verbindungen erhältlich sind, einen Vinylidendoppelbindungsanteil von über 30 % aufweisen und ein zahlengemitteltes Molekulargewicht von 700 bis 20000 besitzen.

2. Thermische Umsetzungsprodukte nach Anspruch 1 aus Oligoalkenen, welche durch Oligomerisierung von linearem 1-Decen, wobei bis zu 40 mol-%, bezogen auf die Menge an linearem 1-Decen, weitere lineare $C_8$- bis $C_{12}$-1-Alkene mit einpolymerisiert werden können, erhältlich sind.

3. Thermische Umsetzungsprodukte nach Anspruch 1 oder 2 aus Oligoalkenen, welche durch Oligomerisierung von 1-Alkenen, die praktisch frei von flüchtigeren Kohlenwasserstoffen mit weniger als 8 C-Atomen eingesetzt werden, erhältlich sind.

4. Thermische Umsetzungsprodukte nach den Ansprüche 1 bis 3 aus Oligoalkenen mit einem zahlengemittelten Molekulargewicht von 2000 bis 15000.

5. Derivate der thermischen Umsetzungsprodukte aus Maleinsäureanhydrid und Oligoalkenen gemäß den Ansprüchen 1 bis 4 mit Aminen oder Alkoholen in Form der entsprechenden Alkenyabernsteinsäureamide, -imide bzw. -ester.

6. Derivate der thermischen Umsetzungsprodukte aus Maleinsäureanhydrid und Oligoalkenen mit Aminen in Form der entsprechenden Alkenylbernsteinsäureimide nach Anspruch 5, erhältlich durch Kondensation der Umsetzungsprodukte aus Maleinsäureanhydrid und Oligoalkenen mit Polyaminen, wobei die eingesetzte Polyaminmenge 10 bis 200 % über dem theoretischen Aminbedarf für die Herstellung eines Bisbernsteinsäureimids liegt und die Aminzahl des so erhaltenen Kondensates mindestens 70 % der theoretisch berechneten Aminzahl des Bisbernsteinsäureimids, bezogen auf die Verseifungszahl des Umsetzungsproduktes aus Maleinsäureanhydrid und Oligoalkenen, beträgt.

7. Verwendung von Derivaten der thermischen Umsetzungsprodukte aus Maleinsäureanhydrid und Oligoalkenen mit Aminen oder Alkoholen gemäß Anspruch 5 oder 6 als Kraft- und Schmierstoffadditive, insbesondere als aschefreie Dispergatoren in Motorenölen.

8. Motorenöle mit einem Gehalt von 0,1 bis 10 Gew.-%, bezogen auf das Motorenöl, an Derivaten der thermischen Umsetzungsprodukte aus Maleinsäureanhydrid und Oligoalkenen mit Aminen oder Alkoholen gemäß Anspruch 5 oder 6.

9. Verfahren zur Herstellung von thermischen Umsetzungsprodukten durch Erhitzen von Maleinsäureanhydrid mit Oligoalkenen, welche durch Oligomerisierung von linearen $C_8$- bis $C_{12}$-1-Alkenen erhalten worden sind sowie einen Vinylidendoppelbindungsanteil von über 30 % aufweisen und ein zahlengemitteltes Molekulargewicht von 700 bis 20000 besitzen, in Abwesenheit von Radikalkettenreaktionen auslösenden Verbindungen auf Temperaturen von 150 bis 250°C, **dadurch gekennzeichnet, daß** die Oligoalkene durch metallocenkatalysierte Oligomerisierung in Gegenwart eines Titan-, Zirkonium- oder Hafnium-Metallocen-Katalysators und eines Aktivators auf Basis von aluminiumorganischen, bororganischen oder carbokationisehen Verbindungen erhalten worden sind.

10. Verfahren zur Herstellung von Derivaten der thermischen Umsetzungsprodukte aus Maleinsäureanhydrid und Oligoalkenen gemäß Anspruch 9, **dadurch gekennzeichnet, daß** man die thermischen Umsetzungsprodukte mit Aminen oder Alkoholen zu den entsprechenden Alkenylbernsteinsäureamiden, -imiden bzw. -estern umsetzt.

**Claims**

1. A thermal reaction product of maleic anhydride and oligoalkenes which are obtainable by metallocene-catalyzed oligomerization of linear $C_8$- to $C_{12}$-1-alkenes in the presence of a titanium, zirconium or hafnium metallocene catalyst and of an activator based on organoaluminum, organoboron or carbocationic compounds, have a vinylidene double bond content of more than 30% and have a number average molecular weight of from 700 to 20,000.

2. A thermal reaction product as claimed in claim 1 of oligoalkenes which are obtainable by oligomerization of linear 1-decene, it being possible for up to 40 mol%, based on the amount of linear 1-decene, of further linear $C_8$- to $C_{12}$-1-alkenes to be incorporated as polymerized units.

3. A thermal reaction product as claimed in claim 1 or 2 of oligoalkenes which are obtainable by oligomerization of 1-alkenes which are used virtually free of more highly volatile hydrocarbons of less than 8 carbon atoms.

4. A thermal reaction product as claimed in any of claims 1 to 3 of oligoalkenes having a number average molecular weight of from 2000 to 15,000.

5. A derivative of a thermal reaction product of maleic anhydride and oligoalkenes as claimed in any of claims 1 to 4 with amines or alcohols in the form of the corresponding alkenylsuccinamides, alkenylsuccinimides or alkenylsuccinic esters.

6. A derivative of a thermal reaction product of a maleic anhydride and oligoalkenes with amines in the form of the corresponding alkenylsuccinimides as claimed in claim 5, obtainable by condensation of a reaction product of maleic anhydride and oligoalkenes with polyamines, the amount of polyamines used being from 10 to 200% above the theoretical amine requirement for the preparation of a bissuccinimide and the amine number of the condensate thus obtained being at least 70%, based on the saponification number of the reaction product of maleic anhydride and oligoalkenes, of the theoretical amine number of the bissuccinimide.

7. The use of derivatives of thermal reaction products of maleic anhydride and oligoalkenes with amines or alcohols as claimed in claim 5 or 6 as fuel additives and lubricant additives, in particular as ashless dispersants in motor oils.

8. A motor oil containing from 0.1 to 10% by weight, based on the motor oil, of derivatives of the thermal reaction products of maleic anhydride and oligoalkenes with amines or alcohol as claimed in claim 5 or 6.

9. A process for the preparation of thermal reaction products by heating maleic anhydride with oligoalkenes which have been obtained by oligomerization of linear $C_8$- to $C_{12}$-1-alkenes, have a vinylidene double bond content of more than 30% and have a number average molecular weight of from 700 to 20,000, in the absence of compounds initiating free radical chain reactions, to temperatures of from 150 to 250°C, wherein the oligoalkenes have been obtained by metallocene-catalyzed oligomerization in the presence of a titanium, zirconium or hafnium metallocene catalyst and an activator based on organoaluminum, organoboron or carbocationic compounds.

10. A process for the preparation of derivatives of the thermal reaction products of maleic anhydride and oligoalkenes as claimed in claim 9, wherein the thermal reaction products are reacted with amines or alcohols to give the corresponding alkenylsuccinamides, alkenylsuccinimides or alkenylsuccinic esters.

**Revendications**

1. Produits de réaction thermique ayant une proportion en liaisons doubles vinylidène supérieure à 30 % et une masse moléculaire moyenne en nombre comprise entre 700 et 20000, obtenus à partir de l'anhydride maléique et des oligoalcènes qu'on peut obtenir à partir de 1-alcènes en $C_8$ à $C_{12}$ linéaires par le moyen de l'oligomérisation catalysée par des métallocènes, en présence d'un catalyseur métallocène à base de titane, de zirconium ou d'hafnium, et d'un amorceur à base de composés organo-aluminiques, organo-bore ou carbocationiques.

2. Les produits de réaction thermique selon la revendication 1 obtenus à partir d'oligoalcènes que l'on peut obtenir par le moyen de l'oligomérisation du 1-décène linéaire, dans lesquelles sont éventuellement insérés dans la chaîne de polymère d'autres 1-alcènes en $C_8$ à $C_{12}$ linéaires en une quantité allant jusqu'à 40 % en moles par rapport à la quantité du 1-décène linéaire.

3. Les produits de réaction thermique selon la revendication 1 ou 2 obtenus à partir d'oligoalcènes, que l'on peut obtenir par le moyen de l'oligomérisation des 1-alcènes que l'on met en oeuvre pratiquement exempt d'hydrocarbures volatiles et ayant moins de 8 atomes de C.

4. Les produits de réaction thermique selon les revendications 1 à 3 obtenus à partir d'oligoalcènes ayant une masse moléculaire moyenne en nombre comprise entre 2000 et 15000.

5. Dérivés des produits de réaction thermique, produits obtenus à partir de l'anhydride maléique et des oligoalcènes selon les revendications 1 à 4 avec des amines ou des alcools, sous forme d'imides, d'esters ou d'amides alcényl-succiniques.

6. Les dérivés des produits de réaction thermique obtenus à partir de l'anhydride maléique et des oligoalcènes avec les amines, sous forme d'imides d'alcényl-succiniques correspondants selon la revendication 5, que l'on peut obtenir au moyen de la condensation des produits de réaction de l'anhydride maléique et des oligoalcènes avec des polyamines, **caractérisés en ce que** la quantité en polyamines mise en oeuvre est de 10 % à 200 % supérieure au besoin théorique en amines pour la fabrication d'un imide d'acide bis-succinique, et **en ce que** l'indice d'amine du condensat ainsi obtenu se chiffre au minimum à 70 % de l'indice d'amine théorique de l'imide d'acide bis-succinique, par rapport à l'indice de saponification du produit de réaction obtenu à partir de l'anhydride maléique et des oligoalcènes.

7. Mise en oeuvre des dérivés des produits de réaction thermique obtenus à partir de l'anhydride maléique et des oligoalcènes avec des amines ou des alcools selon la revendication 5 ou 6 en tant qu'auxiliaire de carburants et de lubrifiants, en particulier en tant que dispersant exempt de cendres dans les huiles pour moteurs.

8. Huiles pour moteurs ayant une teneur en dérivés de produits de réaction thermique obtenus à partir de l'anhydride maléique et des oligoalcènes avec les amines ou des alcools selon la revendication 5 ou 6, comprise entre 0,1 % et 10 % en poids par rapport à l'huile pour moteurs.

9. Procédé de fabrication des produits de réaction thermique en chauffant à une température comprise entre 150°C à 250 °C, de l'anhydride maléique conjointement avec des oligoalcènes obtenus par le moyen de l'oligomérisation de 1-alcènes en $C_8$ à $C_{12}$ linéaires, et qui présentent une proportion supérieure à 30 % en liaisons doubles vinylidène et une masse moléculaire moyenne en nombre comprise entre 700 et 20000, en l'absence de composés aptes à amorcer la réaction des chaînes radicalaires, **caractérisé en ce que** l'on obtient les oligoalcènes par le moyen de l'oligomérisation catalysée par des métallocènes en présence d'un catalyseur métallocène à base de titane, de zirconium ou d'hafnium, et d'un amorceur à base de composés organo-aluminiques, organo-bore ou carbocationiques.

10. Procédé de fabrication des dérivés des produits de réaction thermique obtenus à partir de l'anhydride maléique et des oligoalcènes selon la revendication 9, **caractérisé en ce que** l'on met à réagir les produits de réaction thermique avec des amines ou des alcools pour obtenir les imides, esters ou amides alcényl-succiniques correspondants.